(19) Europäisches Patentamt
European Patent Office
Office européen des brevets

(11) **EP 4 299 606 B1**

(12) **EUROPEAN PATENT SPECIFICATION**

(45) Date of publication and mention
of the grant of the patent:
**04.03.2026 Bulletin 2026/10**

(21) Application number: **22759267.2**

(22) Date of filing: **31.01.2022**

(51) International Patent Classification (IPC):
**C08F 8/00** *(2006.01)* **C08F 214/26** *(2006.01)*
**H01B 7/02** *(2006.01)*

(52) Cooperative Patent Classification (CPC):
(C-Sets available)
**C08F 214/262; C08F 8/22; C09D 127/18;
H01B 3/445** (Cont.)

(86) International application number:
**PCT/JP2022/003641**

(87) International publication number:
**WO 2022/181226 (01.09.2022 Gazette 2022/35)**

(54) **COPOLYMER, MOLDED BODY, INJECTION MOLDED BODY, AND COATED ELECTRICAL WIRE**

COPOLYMER, FORMKÖRPER, SPRITZGUSSKÖRPER UND BESCHICHTETER ELEKTRISCHER DRAHT

COPOLYMÈRE, CORPS MOULÉ, CORPS MOULÉ PAR INJECTION ET FIL ÉLECTRIQUE ENROBÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 JP 2021031092
30.09.2021 JP 2021162123**

(43) Date of publication of application:
**03.01.2024 Bulletin 2024/01**

(73) Proprietor: **Daikin Industries, Ltd.
Osaka-Shi, Osaka 530-0001 (JP)**

(72) Inventors:
• **ISAKA, Tadaharu**
**Osaka-shi, Osaka 530-0001 (JP)**
• **ZENKE, Yumi**
**Osaka-shi, Osaka 530-0001 (JP)**
• **YAMAMOTO, Yukari**
**Osaka-shi, Osaka 530-0001 (JP)**
• **TSUDA, Hayato**
**Osaka-shi, Osaka 530-0001 (JP)**
• **YAMAGUCHI, Yasuyuki**
**Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
EP-B1- 1 462 458 WO-A1-03/048214
WO-A1-03/048214 CN-A- 110 790 854
JP-A- 2002 003 514 JP-A- 2004 534 131
JP-A- 2009 059 690 JP-A- 2009 059 690
JP-A- 2013 078 947 JP-A- 2017 214 478
JP-A- 2019 214 641 US-A1- 2009 038 821

(52)  Cooperative Patent Classification (CPC): (Cont.)

C-Sets
**C08F 8/22, C08F 214/262;**
**C08F 214/262, C08F 216/1408**

## Description

TECHNICAL FIELD

The present disclosure relates to a copolymer, a formed article, an injection molded article, and a coated electric wire.

BACKGROUND ART

Patent Literature 1 discloses a coated electric wire comprising a core wire coated with a tetrafluoroethylene [TFE]-based copolymer, wherein the TFE-based copolymer has TFE unit derived from TFE and perfluoro(alkyl vinyl ether) [PAVE] unit derived from PAVE, contains more than 5% by mass and 20% by mass or less PAVE unit with respect to the whole of the monomer units, contains fewer than 10 unstable terminal groups per $1 \times 10^6$ carbon atoms, and has a melting point of 260°C or higher. Patent Literatures 2 and 3 disclose the use of copolymers of tetrafluoroethylene and a perfluoro(alkyl vinyl ether) for the preparation of moulded articles by injection moulding and for the coating of electric wires. Patent Literature 4 discloses moulding materials comprising a copolymer of tetrafluoroethylene and a perfluoro(alkyl vinyl ether).

RELATED ART

PATENT LITERATURE

Patent Literature 1: Japanese Patent Laid-Open No. 2009-059690
Patent Literature 2: JP 2019 214641 A
Patent Literature 3: US 2009 038821 A1
Patent Literature 4: EP 1462458 B1

SUMMARY OF THE INVENTION

PROBLEM TO BE SOLVED BY THE INVENTION

An object of the present disclosure is to provide a copolymer that is capable of providing a visually attractive formed article having a variety of shapes by injection molding even when a metal mold to be used for molding has a low temperature, that hardly corrodes the metal mold to be used for molding and a core wire coated therewith, that is capable of creating a coating layer having a uniform thickness on a core wire having a small diameter by extrusion forming, and that is capable of providing a formed article which has excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and which hardly makes fluorine ions to dissolve out in an electrolytic solution.

MEANS FOR SOLVING THE PROBLEM

According to the present disclosure, there is provided a copolymer comprising tetrafluoroethylene unit and (propyl vinyl ether) unit, wherein the copolymer has a content of perfluoro(propyl vinyl ether) unit of 4.8 to 6.2% by mass with respect to the whole of the monomer units, a melt flow rate at 372°C of 17.0 to 23.0 g/10 min, and the number of functional groups of 50 or less per $10^6$ main-chain carbon atoms.
The copolymer of the present disclosure preferably has a melt flow rate at 372°C of 17.0 to 21.0 g/10 min.
According to the present disclosure, an injection molded article comprising the above copolymer is further provided.
According to the present disclosure, a coated electric wire having a coating layer comprising the above copolymer is further provided.
According to the present disclosure, a formed article comprising the above copolymer, wherein the formed article is a valve, a joint, a flow meter, or an electric wire coating is further provided.

EFFECTS OF INVENTION

According to the present disclosure, there can be provided a copolymer that is capable of providing a visually attractive formed article having a variety of shapes by injection molding even when a metal mold to be used for molding has a low temperature, that hardly corrodes the metal mold to be used for molding and a core wire coated therewith, that is capable of creating a coating layer having a uniform thickness on a core wire having a small diameter by extrusion forming, and that is capable of providing a formed article which has excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and which hardly makes fluorine ions to dissolve out in an electrolytic solution.

DESCRIPTION OF EMBODIMENTS

Hereinafter, specific embodiments of the present disclosure will now be described in detail, but the present disclosure is not limited to the following embodiments.

A copolymer of the present disclosure contains tetrafluoroethylene (TFE) unit and perfluoro(propyl vinyl ether) (PPVE) unit.

The copolymer (PFA) containing TFE unit and PPVE unit is used as a material for forming valves for controlling the pressure and the flow rate of fluid such as ozone water. Such valves are required to have ozone resistance, transparency, abrasion resistance, nitrogen low permeability, creep resistance, high temperature tensile creep property, and chemical solution low permeability. Moreover, some of such valves have a complex structure, and thus the copolymer is also required to have good moldability.

According to Patent Literature 1, in the tetrafluoroethylene [TFE]-based copolymer having TFE unit derived from TFE and perfluoro(alkyl vinyl ether) [PAVE] unit derived from PAVE, the PAVE unit exceeding 5% by mass with respect to the whole of the monomer units is described as enhancing melt fabricability and improving crack resistance. However, a copolymer is not known that has excellent moldability and that is capable of providing a formed article having excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability.

It has been found that by suitably regulating the content of the PPVE unit, the melt flow rate (MFR), and the number of functional groups of the copolymer containing the TFE unit and the PPVE unit, the moldability of the copolymer is significantly improved and, at the same time, a metal mold to be used for molding is hardly corroded. Further, it has been also found that the use of such a copolymer provides a formed article having excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability. By using the copolymer of the present disclosure, the performance of valves used to circulate ozone water is expected to be dramatically improved.

In addition, from the copolymer of the present disclosure, a coating layer having a uniform thickness can be formed by extrusion forming on a core wire having a small diameter. Moreover, the obtained coating layer hardly corrodes the core wire. Thus, the copolymer of the present disclosure can be utilized not only as a material for a valve, but also in a broad range of applications such as an electric wire coating.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is 4.8 to 6.2% by mass with respect to the whole of the monomer units. The content of the PPVE unit of the copolymer is preferably 4.9% by mass or higher, more preferably 5.0% by mass or higher, still more preferably 5.1% by mass or higher, especially preferably 5.2% by mass or higher, and most preferably 5.3% by mass or higher, and is preferably 6.1% by mass or lower, more preferably 6.0% by mass or lower, still more preferably 5.9% by mass or lower, especially preferably 5.8% by mass or lower, and most preferably 5.6% by mass or lower. An excessively large content of the PPVE unit of the copolymer results in poor sealability at high temperatures, nitrogen low permeability, high-temperature rigidity, creep resistance, high-temperature tensile creep resistance, and water vapor low permeability. An excessively small content of the PPVE unit of the copolymer results in poor transparency, abrasion resistance, and long-term ozone resistance.

The content of TFE unit of the copolymer is, with respect to the whole of the monomer units, preferably 93.8 to 95.2% by mass, more preferably 93.9% by mass or higher, still more preferably 94.0% by mass or higher, further still more preferably 94.1% by mass or higher, especially preferably 94.2% by mass or higher, and most preferably 94.4% by mass or higher, and is more preferably 95.1% by mass or lower, still more preferably 95.0% by mass or lower, further still more preferably 94.9% by mass or lower, especially preferably 94.8% by mass or lower, and most preferably 94.7% by mass or lower. An excessively small content of TFE unit of the copolymer possibly results in poor sealability at high temperatures, nitrogen low permeability, high-temperature rigidity, creep resistance, high-temperature tensile creep property, and water vapor low permeability. An excessively large content of TFE unit of the copolymer possibly results in poor transparency, abrasion resistance, and long-term ozone resistance.

In the present disclosure, the content of each monomer unit in the copolymer is measured by a $^{19}$F-NMR method.

The copolymer can also contain a monomer unit derived from a monomer copolymerizable with TFE and PPVE. In this case, the content of the monomer unit copolymerizable with TFE and PPVE is, with respect to the whole of the monomer units of the copolymer, preferably 0 to 1.4% by mass, more preferably 0.05 to 0.8% by mass, and still more preferably 0.1 to 0.5% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] represented by $CF_2=CF-ORf^1$ wherein $Rf^1$ is a perfluoroalkyl group having 1 to 8 carbon atoms (excluding PPVE), and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 17.0 to 23.0 g/10 min. The MFR of the copolymer is preferably 17.1 g/10 min or higher, more preferably 18.0 g/10 min or higher, still more preferably 19.0 g/10 min or higher, and further still more preferably 20.0 g/10 min or higher, and is preferably 22.9 g/10 min or lower, more preferably 22.0 g/10 min or lower, still more preferably 21.9 g/10 min or lower, especially preferably 21.0 g/10 min or lower, and most preferably 20 g/10 min or lower. Due to that the MFR of the copolymer is in the above range, the moldability of the copolymer is enhanced, and a formed article can be obtained that has excellent sealability at high temperatures, water vapor low permeability, abrasion resistance, nitrogen low permeability, high-temperature rigidity, creep resistance, and long-term ozone resistance.

In the present disclosure, the MFR is a value obtained as a mass (g/10 min) of the polymer flowing out from a nozzle having an inner diameter of 2.1 mm and a length of 8 mm per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less, and most preferably 6 or less. Due to that the number of functional groups of the copolymer is in the above range, a metal mold is hardly corroded even when forming the copolymer by filling the metal mold with the copolymer, and a core wire is hardly corroded even when the copolymer is used as an electric wire coating. Moreover, a formed article can be obtained that has excellent long-term ozone resistance, nitrogen low permeability, creep resistance, and high-temperature tensile creep property, that hardly allows chemical solutions such as an electrolyte and methyl ethyl ketone to permeate, and that hardly allows fluorine ions to be eluted into an electrolytic solution. In particular, by suitably regulating the content of the PPVE unit, the melt flow rate (MFR), and the number of functional groups of the copolymer containing the TFE unit and the PPVE unit, the creep resistance and the high-temperature tensile creep property of a formed article can be enhanced, and thus a formed article can be obtained that hardly deforms and likely maintains its original shape even when a compressive load is applied in a high-temperature environment and even when a tensile load is applied in a high-temperature environment.

For the identification of the kind of the functional groups and measurement of the number of the functional groups, infrared spectroscopy can be used.

The number of the functional groups is measured, specifically, by the following method. First, the copolymer is formed by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1\times10^6$ carbon atoms in the copolymer is calculated according to the following formula (A).

$$N = I \times K/t \cdots (A)$$

I: absorbance
K: correction factor

t: thickness of film (mm)

For reference, the absorption frequency, the molar absorption coefficient and the correction factor for some functional groups are shown in Table 1. Then, the molar absorption coefficient are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, -CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of the functional group -COF is the total number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The functional groups are ones present on main chain terminals or side chain terminals of the copolymer, and ones present in the main chain or the side chains. The number of functional groups may be the total of numbers of -CF=CF$_2$, -CF$_2$H, -COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

The copolymer satisfying the above range regarding the number of functional groups can be obtained by subjecting the copolymer to a fluorination treatment. That is, the copolymer of the present disclosure is preferably one which is subjected to the fluorination treatment. Further, the copolymer of the present disclosure preferably has -CF$_3$ terminal groups.

The melting point of the copolymer is preferably 295 to 310°C, more preferably 298°C or higher, still more preferably 300°C or higher, especially preferably 301°C or higher, and most preferably 302°C or higher, and is more preferably 306°C or lower. Due to that the melting point is in the above range, there can be obtained the copolymer giving formed articles better in the sealability particularly at high temperatures.

In the present disclosure, the melting point can be measured by using a differential scanning calorimeter [DSC].

The water vapor permeability of the copolymer is preferably 13.0 g·cm/m$^2$ or lower, and more preferably 12.0 g·cm/m$^2$ or lower. Due to that the content of the PPVE unit, the melt flow rate (MFR), and the number of functional groups of the copolymer containing the TFE unit and the PPVE unit are suitably regulated, the copolymer of the present disclosure has extremely good water vapor low permeability because. Accordingly, when a formed article containing the copolymer of the present disclosure is used as, for example, a piping member (such as a valve) for feeding ozone water, permeation of water vapor through the piping member can be suppressed, thus the amount of ozone permeating the piping member together with water vapor can be also reduced, and thus excellent ozone resistance of the piping member can be held.

In the present disclosure, the water vapor permeability can be measured under the condition of a temperature of 95°C and for 30 days. Specific measurement of the water vapor permeability can be carried out by a method described in Examples.

The nitrogen permeability coefficient of the copolymer is preferably 320 $cm^3 \cdot mm/ (m^2 \cdot 24\ h \cdot atm)$ or less. Due to that the content of the PPVE unit, the melt flow rate (MFR), and the number of functional groups of the copolymer containing the TFE unit and the PPVE unit are suitably regulated, the copolymer of the present disclosure has excellent nitrogen low permeability.

In the present disclosure, the nitrogen permeability coefficient can be measured under the condition of a temperature of 70°C and a test humidity of 0% RH. Specific measurement of the nitrogen permeability coefficient can be carried out by a method described in Examples.

The electrolytic solution permeability of the copolymer is preferably 7.5 $g \cdot cm/m^2$ or lower, more preferably 7.3 $g \cdot cm/m^2$ or lower, and still more preferably 7.1 $g \cdot cm/m^2$ or lower. Due to that the content of the PPVE unit, the melt flow rate (MFR), and the number of functional groups of the copolymer containing the TFE unit and the PPVE unit are suitably regulated, the copolymer of the present disclosure has excellent electrolytic solution low permeability. Thus, by using the copolymer of the present disclosure, a formed article that hardly makes a chemical solution such as an electrolytic solution to permeate can be obtained and, therefore, for example, a valve obtained with the copolymer of the present disclosure can suitably be used in a pipe for transferring a chemical solution such as an electrolytic solution.

In the present disclosure, the electrolytic solution permeability can be measured under the condition of a temperature of 60°C and for 30 days. Specific measurement of the electrolytic solution permeability can be carried out by a method described in Examples.

The methyl ethyl ketone (MEK) permeability of the copolymer is preferably 70.0 $mg \cdot cm/m^2 \cdot day$ or less. Due to that the content of the PPVE unit, the melt flow rate (MFR), and the number of functional groups of the copolymer containing the TFE unit and the PPVE unit are suitably regulated, the copolymer of the present disclosure has excellent low MEK permeability. Thus, by using the copolymer of the present disclosure, a formed article that hardly allows a chemical solution such as MEK to permeate can be obtained.

In the present disclosure, the MEK permeability can be measured under the condition of a temperature of 60°C and for 60 days. Specific measurement of the MEK permeability can be carried out by a method described in Examples.

In the copolymer of the present disclosure, the amount of fluorine ions dissolving out therefrom detected by an electrolytic solution immersion test is, in terms of mass, preferably 1.0 ppm or lower, more preferably 0.8 ppm or lower and still more preferably 0.7 ppm or lower. Due to that the amount of fluorine ions dissolving out is in the above range, the generation of gas such as HF in a non-aqueous electrolyte battery can be more suppressed, and the deterioration and the shortening of the service life of the battery performance of a non-aqueous electrolyte battery can be more suppressed.

In the present disclosure, the electrolytic solution immersion test can be carried out by preparing a test piece of the copolymer having a weight corresponding to that of 10 sheets of formed articles (15 mm × 15 mm × 0.2 mm) of the copolymer, putting, in a thermostatic chamber of 80°C, a glass-made sample bottle in which the test piece and 2 g of dimethyl carbonate (DMC) have been charged and allowing the bottle to stand for 144 hours.

The storage elastic modulus (E') at 150°C of the copolymer is preferably 73 MPa or higher, more preferably 78 MPa or higher, and still more preferably 82 MPa or higher, and preferably 1,000 MPa or lower, more preferably 500 MPa or lower, and still more preferably 300 MPa or lower. Due to that the storage elastic modulus (E') at 150°C of the copolymer is in the above range, there can be obtained the copolymer giving formed articles which can keep on exhibiting a sufficient rebound resilience also at high temperatures for a long term, and being better in the sealability at high temperatures.

The storage elastic modulus (E') can be measured by carrying out a dynamic viscoelasticity measurement under the condition of a temperature-increasing rate of 2°C/min and a frequency of 10 Hz and in the range of 30 to 250°C. The storage elastic modulus (E') at 150°C can be raised by regulating the content of the PPVE unit and the melt flow rate (MFR) of the copolymer.

The seal pressure at 150°C of the copolymer is preferably 0.30 MPa or higher, more preferably 0.34 MPa or higher, and still more preferably 0.38 MPa or higher; and the upper limit is not limited and may be 3.00 MPa or lower. The seal pressure at 150°C of the copolymer can be raised by regulating the content of the PPVE unit, the melt flow rate (MFR), and the number of functional groups of the copolymer.

The seal pressure can be determined as follows. A test piece obtained from the copolymer is deformed at a compression deformation rate of 50%, allowed to stand as is at 150°C for 18 hours, released from the compressed state, and allowed to stand at room temperature for 30 min, and thereafter, the height of the test piece (height of the test piece after being compressiblely deformed) is measured; and the seal pressure can be calculated by the following formula using the height of the test piece after being compressiblely deformed, and the storage elastic modulus (MPa) at 150°C:

$$\text{Seal pressure at 150°C (MPa)} = (t_2 - t_1)/t_1 \times E'$$

$t_1$: an original height (mm) of a test piece before being compressiblely deformed × 50%
$t_2$: a height (mm) of the test piece after being compressiblely deformed

E': a storage elastic modulus (MPa) at 150°C

The copolymer of the present disclosure can be produced by a polymerization method such as suspension polymerization, solution polymerization, emulsion polymerization, or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

The polymerization initiator to be used may be an oil-soluble radical polymerization initiator, or a water-soluble radical polymerization initiator.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate, and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an $\omega$-hydroperfluoroalkyl group, or a fluorochloroalkyl group.

Examples of the di[fluoro(or fluorochloro)acyl] peroxides include di($\omega$-hydro-dodecafluorohexanoyl) peroxide, di($\omega$-hydro-tetradecafluoroheptanoyl) peroxide, di($\omega$-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di($\omega$-chloro-hexafluorobutyryl) peroxide, di($\omega$-chloro-decafluorohexanoyl) peroxide, di($\omega$-chloro-tetradecafluorooctanoyl) peroxide, $\omega$-hydrododecafluorohepta-noyl-$\omega$-hydrohexadecafluorononanoyl peroxide, $\omega$-chloro-hexafluorobutyryl-$\omega$-chloro-decafluorohexanoyl peroxide, $\omega$-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, percarbonic acid, and the like; organic peroxides such as disuccinoyl peroxide and diglutaroyl peroxide; and t-butyl permaleate and t-butyl hydroperoxide. A reductant such as a sulfite salt may be combined with a peroxide and used, the amount thereof to be used may be 0.1 to 20 times with respect to the peroxide.

In the polymerization, a surfactant, a chain transfer agent and a solvent may be used, which are conventionally known.

The surfactant may be a known surfactant, and, for example, nonionic surfactants, anionic surfactants, and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to the polymerization water) is preferably 50 to 5,000 ppm.

Examples of the chain transfer agent include hydrocarbons such as ethane, isopentane, n-hexane, and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride, and methyl chloride. The amount of the chain transfer agent to be added may vary depending on the chain transfer constant value of the compound to be used, but is usually in the range of 0.01 to 20% by mass with respect to the polymerization solvent.

The solvent may include mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroa-laknes such as $CF_2ClCFClCF_2CF_3$ and $CF_3CFClCFClCF_3$; hydrofluroalkanes such as $CF_3CFHCFHCF_2CF_3$, $CF_2HCF_2CF_2CF_2H$ and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$, and $CF_3CF_2CF_2CF_2CF_2CF_3$, and among these, perfluoroalkanes are preferred. The amount of the fluorosolvent to be used is, from the viewpoint of suspendability and economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount, and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, cleaning, and drying the copolymer contained in the aqueous dispersion. Then in the case of obtaining the copolymer as a slurry by the polymerization reaction, the copolymer can be recovered by taking out the slurry from a reaction container, and cleaning and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into predetermined length to form the copolymer into pellets. The extrusion temperature in the melt extrusion needs to be varied depending on the melt viscosity and the production method of the copolymer, and is preferably from the melting point of the copolymer +20°C to the melting point of the copolymer +140°C. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water at 30 to 200°C, steam at 100 to 200°C or hot air at 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$, and -CONH$_2$ and thermally relatively stable functional groups thereof, such as -CF$_2$H, can be converted to thermally very stable -CF$_3$. Consequently, the total number (the number of functional groups) of -COOH, -COOCH$_3$, -CH$_2$OH, -COF, -CF=CF$_2$, -CONH$_2$, and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, and halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas include nitrogen gas, helium gas, and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents, and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene, and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer and non-fluorinated polymers.

A method of producing the composition includes a method of dry mixing the copolymer and the other components, and a method of previously mixing the copolymer and the other components by a mixer and then melt-kneading the mixture by a kneader, melt extruder or the like.

The copolymer of the present disclosure or the above-mentioned composition can be used as a processing aid, a forming material and the like, but use as a forming material is suitable. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding, and rotolining molding. As the forming method, among these, preferable are extrusion forming, compression molding, injection molding, and transfer molding; from the viewpoint of being able to produce formed articles at high productivity, more preferable are injection molding, extrusion forming, and transfer molding, and even more preferable is injection molding. That is, the formed article is preferably an extrusion formed article, a compression formed article, an injection molded article, or a transfer formed article; and from the viewpoint of being able to produce a formed article at high productivity, is more preferably an injection molded article, an extrusion formed article, or a transfer formed article, and is still more preferably an injection molded article. By forming the copolymer of the present disclosure by injection molding, a visually attractive formed article having a variety of shapes can be obtained without corroding the metal mold to be used for molding even when the metal mold to be used for molding has a low temperature.

The formed articles containing the copolymer of the present disclosure may be, for example, nuts, bolts, joints, films, bottles, gaskets, electric wire coatings, tubes, hoses pipes, valves, sheets, seals, packings, tanks, rollers, containers, cocks, connectors, filter housings, filter cages, flow meters, pumps, wafer carriers, and wafer boxes.

The copolymer of the present disclosure, the above composition and the above formed article can be used, for example, in the following applications.

Food packaging films, and members for liquid transfer for food production apparatuses, such as lining materials of fluid transfer lines, packings, sealing materials and sheets, used in food production processes;
chemical stoppers and packaging films for chemicals, and members for chemical solution transfer, such as lining materials of liquid transfer lines, packings, sealing materials and sheets, used in chemical production processes;
inner surface lining materials of chemical solution tanks and piping of chemical plants and semiconductor factories;
members for fuel transfer, such as O (square) rings, tubes, packings, valve stem materials, hoses and sealing materials, used in fuel systems and peripheral equipment of automobiles and such as hoses and sealing materials, used in ATs of automobiles; members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;
members for chemical transfer for semiconductor production apparatuses, such as O (square) rings, tubes, packings, valve stem materials, hoses, sealing materials, rolls, gaskets, diaphragms and joints;
members for coating and inks, such as coating rolls, hoses and tubes, for coating facilities, and containers for inks;
members for food and beverage transfer, such as tubes, hoses, belts, packings and joints for food and beverage, food packaging materials, and members for glass cooking appliances;
members for waste liquid transport, such as tubes and hoses for waste transport;
members for high-temperature liquid transport, such as tubes and hoses for high-temperature liquid transport;
members for steam piping, such as tubes and hoses for steam piping;
corrosion-proof tapes for piping, such as tapes to be wound on piping of decks and the like of ships;
various coating materials, such as electric wire coating materials, optical fiber coating materials, and transparent front side coating materials installed on the light incident side and back side lining materials of photoelectromotive elements of solar cells;
diaphragms and sliding members such as various types of packings of diaphragm pumps;
films for agriculture, and weathering covers for various kinds of roof materials, sidewalls and the like;
interior materials used in the building field, and coating materials for glasses such as non-flammable fireproof safety glasses; and
lining materials for laminate steel sheets used in the household electric field.

The fuel transfer members used in fuel systems of automobiles further include fuel hoses, filler hoses, and evap hoses. The above fuel transfer members can also be used as fuel transfer members for gasoline additive-containing fuels, resistant to sour gasoline, resistant to alcohols, and resistant to methyl tertiary butyl ether and amines and the like.

The above chemical stoppers and packaging films for chemicals have excellent chemical resistance to acids and the like. The above chemical solution transfer members also include corrosion-proof tapes wound on chemical plant pipes.

The above formed article also includes vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure are excellent in transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and therefore can suitably be used as nuts, bolts, joints, packings, valves, cocks, connectors, filter housings, filter cages, flow meters, pumps, or the like.

As for the formed articles containing the copolymer of the present disclosure, a visually attractive formed article having a variety of shapes can be produced by injection molding without corroding a metal mold even when the metal mold to be used for molding has a low temperature, the formed article has excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and which hardly makes fluorine ions to dissolve out in an electrolytic solution, and therefore can suitably be utilized as members to be compressed such as gaskets or packings. The members to be compressed of the present disclosure may be gaskets or packings. The gaskets or packings of the present disclosure can be inexpensively produced by injection molding without corroding a metal mold, and have excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability. The members to be compressed of the present disclosure have excellent sealability at high temperatures, creep resistance, high-temperature tensile creep property, and water vapor low permeability, and therefore can suitably be used as piping members for transferring a chemical solution that should not be mixed with water such as water vapor in outside air.

The members to be compressed of the present disclosure, even when being deformed at a high compression deformation rate, exhibit a high seal pressure. The members to be compressed of the present disclosure can be used in a state of being compressed at a compression deformation rate of 10% or higher, and can be used in a state of being compressed at a compression deformation rate of 20% or higher or 25% or higher. By using the member to be compressed of the present disclosure by being deformed at such a high compression deformation rate, a certain rebound resilience can be retained for a long term, and the sealing property and the insulating property can be retained for a long term.

The members to be compressed of the present disclosure, even when being deformed at a high temperature and at a high compression deformation rate, exhibit a high storage elastic modulus, a large amount of recovery and a high seal pressure. The members to be compressed of the present disclosure can be used at 150°C or higher and in a state of being compression deformed at a compression deformation rate of 10% or higher, and can be used at 150°C or higher and in a state of being compression deformed at a compression deformation rate of 20% or higher or 25% or higher. By using the members to be compressed of the present disclosure by being deformed at such a high temperature and at such a high compression deformation rate, a certain rebound resilience can be retained also at high temperatures for a long term and the sealing property and the insulating property at high temperatures can be retained for a long term.

In the case where the members to be compressed are used in a state of being compressed, the compression deformation rate is a compression deformation rate of a portion having the highest compression deformation rate. For example, in the case where a flat member to be compressed is used in a state of being compressed in the thickness direction, the compression deformation rate is that in the thickness direction. Further, for example, in the case where a member to be compressed is used with only some portions of the member being compressed, the compression deformation rate is that of a portion having the highest compression deformation rate among compression deformation rates of the compressed portions.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptical shape, a corner-rounded square or the like, and may be a shape having a through-hole in the central portion thereof.

It is preferable that the members to be compressed of the present disclosure are used as piping members for circulating a chemical solution such as ozone water. Due to that the members to be compressed of the present disclosure have excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and are therefore particularly suitable as a member that is used in a state of being in contact with ozone water. That is, the members to be compressed of the present disclosure may have a surface that comes into contact with ozone water.

It is preferable that the members to be compressed of the present disclosure are used as members constituting non-aqueous electrolyte batteries. Due to that the members to be compressed of the present disclosure have extremely good water vapor low permeability, have extremely good sealability at high temperatures, and hardly allow fluorine ions to be eluted into an electrolytic solution, the members are especially suitable as members used in a state of being in contact with a non-aqueous electrolyte in the non-aqueous electrolyte batteries. That is, the members to be compressed of the present disclosure may be ones having a liquid-contact with a non-aqueous electrolyte in the non-aqueous electrolyte batteries.

The members to be compressed of the present disclosure hardly make fluorine ions to dissolve out in non-aqueous electrolytes. Therefore, by using the members to be compressed of the present disclosure, the rise in the fluorine ion concentration in the non-aqueous electrolytes can be suppressed. Consequently, by using the members to be compressed of the present disclosure, the generation of gases such as HF in the non-aqueous electrolytes can be suppressed, and the deterioration and the shortening of the service life of the battery performance of the non-aqueous electrolyte battery can be suppressed.

From the viewpoint that the member to be compressed of the present disclosure can more suppress the generation of gas such as HF in non-aqueous electrolytes, and can more suppress the deterioration and the shortening of the service life of the battery performance of non-aqueous electrolyte batteries, the amount of fluorine ions dissolving out to be detected in an electrolytic solution immersion test is, in terms of mass, preferably 1.0 ppm or less, more preferably 0.8 ppm or less, and still more preferably 0.7 ppm or less. The electrolytic solution immersion test can be carried out by preparing a test piece having a weight corresponding to 10 sheets of a formed article (15 mm $\times$ 15 mm $\times$ 0.2 mm) using a member to be compressed, and putting a glass-made sample bottle in which the test piece and 2 g of dimethyl carbonate (DMC) have been charged in a thermostatic chamber of 80°C and allowing the sample bottle to stand for 144 hours.

The members to be compressed of the present disclosure hardly make water vapor to permeate. Therefore, by using the members to be compressed of the present disclosure, the permeation of water vapor from the outside to secondary batteries can be suppressed. Therefore, by using the members to be compressed of the present disclosure, the deterioration and the shortening of the service life of the battery performance of non-aqueous electrolyte batteries can be suppressed.

The water vapor permeability of the members to be compressed of the present disclosure is, from the viewpoint that the deterioration and the shortening of the service life of the battery performance of the non-aqueous electrolyte batteries can be more suppressed, preferably 13.0 g·cm/m$^2$ or lower and more preferably 12.0 g·cm/m$^2$ or lower. The water vapor permeability of the members to be compressed can be measured under the condition of a temperature of 95°C and for 30 days.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

The non-aqueous electrolyte is not limited, and one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, and may be LiClO$_4$, LiAsF$_6$, LiPF$_6$, LiBF$_4$, LiCl, LiBr, CH$_3$SO$_3$Li, CF$_3$SO$_3$Li, cesium carbonate and the like.

The members to be compressed of the present disclosure can suitably be utilized, for example, as sealing members such as sealing gaskets and sealing packings, and insulating members such as insulating gaskets or insulating packings. The sealing member is a member to be used for preventing leakage of a liquid or a gas, or penetration of a liquid or a gas from the outside. The insulating members are members to be used for insulating electricity. The members to be compressed of the present disclosure may also be members to be used for the purpose of both sealing and insulation.

The members to be compressed of the present disclosure, due to being excellent in the heat resistance and remarkably excellent in the sealability at high temperatures, can suitably be used under an environment of becoming high temperatures. It is suitable for the members to be compressed of the present disclosure to be used, for example, in an environment where the maximum temperature becomes 40°C or higher. It is suitable for the members to be compressed of the present disclosure to be used, for example, in an environment where the maximum temperature becomes 150°C or higher. Examples of the case where the temperature of the members to be compressed of the present disclosure may become such high temperatures include the case where after a member to be compressed is installed in a state of being compressed to a battery, other battery members are installed to the battery by welding, and the case where a non-aqueous electrolyte battery generates heat.

Due to that the members to be compressed of the present disclosure have extremely good water vapor low permeability, have excellent sealability at high temperatures, high-temperature rigidity, creep resistance, and high-temperature tensile creep property, hardly make fluorine ions dissolve out in an electrolytic solution, the member to be compressed can suitably be used as sealing members for a non-aqueous electrolyte batteries or insulating members for non-aqueous electrolyte batteries. For example, in the charge time of batteries such as non-aqueous electrolyte secondary batteries, the temperature of the batteries temporarily may become 40°C or higher, specially temporarily become 150°C or higher in some cases. Even when the members to be compressed of the present disclosure are used by being deformed at high temperatures and at a high compression deformation rate, and, moreover are brought into contact with non-aqueous electrolytes at high temperatures, in batteries such as non-aqueous electrolyte batteries, a high rebound resilience is not impaired. Therefore, the members to be compressed of the present disclosure, in the case of being used as sealing members, have excellent sealing property and, also at high temperatures, retain the sealing property for a long term. Further, the members to be compressed of the present disclosure, due to containing the above copolymer, have the excellent insulating property. Therefore, in the case of using the members to be compressed of the present disclosure as insulating members, the members firmly adhere to two or more electrically conductive members and prevent short circuits over a long term.

The copolymer of the present disclosure hardly corrodes a core wire to be coated. Moreover, since a coating layer having a uniform thickness can be formed on a core wire even when the core wire has a small diameter by forming the copolymer of the present disclosure by extrusion forming, the copolymer of the present disclosure can suitably be utilized as a material for forming an electric wire coating. Accordingly, the coated electric wire provided with a coating layer containing the copolymer of the present disclosure has excellent electrical properties because the core wire is hardly corroded, and the outer diameter is barely varied even when the diameter of the core wire is small.

The coated electric wire has a core wire, and the coating layer that installed on the periphery of the core wire and containing the copolymer of the present disclosure. For example, an extrusion-formed article made by melt extruding the copolymer in the present disclosure on a core wire can be made into the coating layer. The coated electric wires are suitable for high-frequency transmission cables, flat cables, heat-resistant cables and the like, and particularly to high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to the specific examples of the core wire, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter) may be used.

The coating layer is preferably one having a thickness of 0.1 to 3.0 mm. It is also preferable that the thickness of the coating layer is 2.0 mm or less.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, and is usually: the diameter of the inner conductor is approximately 0.1 to 3 mm, the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably ones in which the cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller, and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell by image processing and averaging the diameters.

The foaming ratio of the coating layer may be 20% or higher, and is more preferably 30% or higher, still more preferably 33% or higher, and further still more preferably 35% or higher. The upper limit is not limited, and is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a molten state onto the core wire to thereby form the coating layer.

In forming a coating layer, by heating the copolymer and introducing a gas in the copolymer in a molten state, the coating layer containing cells can be formed. As the gas, there can be used, for example, a gas such as chlorodifluoromethane, nitrogen or carbon dioxide, or a mixture thereof. The gas may be introduced as a pressurized gas into the heated copolymer, or may be generated by mingling a chemical foaming agent in the copolymer. The gas dissolves in the copolymer in a molten state.

Also, the copolymer of the present disclosure can suitably be utilized as a material for products for high-frequency signal transmission.

The products for high-frequency signal transmission are not limited as long as being products to be used for transmission of high-frequency signals, and examples include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that the good electric property is provided. The printed wiring boards are not limited, and examples thereof include printed wiring boards of electronic circuits for cell phones, various computers, communication devices and the like. As the (2) formed articles, antenna covers are preferable in that the dielectric loss is low.

By forming the copolymer of the present disclosure by injection molding, a visually attractive formed article having a variety of shapes can be obtained at high productivity. Also, the formed article containing the copolymer of the present disclosure has excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability. Accordingly, the formed article containing the copolymer of the present disclosure can suitably be utilized as films or sheets.

The film of the present disclosure is useful as release films. The release films can be produced by forming the copolymer of the present disclosure by melt extrusion, calendering, press molding, casting or the like. From the viewpoint that uniform thin films can be obtained, the release films can be produced by melt extrusion forming.

The film of the present disclosure can be applied to the surface of a roll that is used in OA device. The copolymer of the present disclosure is formed into required shapes by extrusion forming, compression molding, press molding, or the like, such as sheets, films, or a tubes, and can be used as surface materials for OA device rolls, OA device belts and the like. Thin-wall tubes and films can be produced particularly by melt extrusion forming.

The formed articles containing the copolymer of the present disclosure have excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and therefore can suitably be utilized as bottles or tubes. The bottles or the tubes of the present disclosure enable the contents to be easily viewed, and are hardly damaged during use.

The copolymer of the present disclosure can be formed by injection molding into a visually attractive formed article having a variety of shapes even when the mold used in forming has a low temperature, and hardly corrodes the metal mold to be used for molding. Moreover, the obtained formed article has an excellent appearance, and has excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability, and therefore can suitably be utilized as valves. Thus, the valve containing the copolymer of the present disclosure can be inexpensively and, moreover, highly productively produced without corroding a metal mold, and also has excellent transparency, abrasion resistance, nitrogen low permeability, chemical solution low permeability, long-term ozone resistance, sealability at high temperatures, high-temperature rigidity, creep resistance, high-temperature tensile creep property, and water vapor low permeability. In the valve of the present disclosure, at least the fluid-contacting part can be composed of the copolymer. Also, the valve of the present disclosure may be a valve having a housing containing the copolymer.

So far, embodiments have been described, but it is to be understood that various changes and modifications of patterns and details may be made without departing from the subject matter and the scope of the claims.

EXAMPLES

The embodiments of the present disclosure will now be described by way of Examples as follows, but the present disclosure is not limited only to these Examples.

Each numerical value in the Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle having an inner diameter of 2.1 mm and a length of 8 mm at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was formed by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that was completely fluorinated and had no functional groups was obtained. From an absorption peak of a specific functional group observed on this difference spectrum, the number N of the functional group per $1\times10^6$ carbon atoms in the sample was calculated according to the following formula (A):

$$N = I \times K/t \cdots (A)$$

I: absorbance
K: correction factor
t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corporation); and the melting point was determined from a melting curve peak observed in the second temperature raising step.

Example 1

49.0 L of pure water was charged in a 174 L-volume autoclave; nitrogen replacement was sufficiently carried out; thereafter, 40.7 kg of perfluorocyclobutane, 1.61 kg of perfluoro(propyl vinyl ether) (PPVE) and 2.00 kg of methanol were charged; and the temperature in the system was held at 35°C and the stirring speed was held at 200 rpm. Then, tetrafluoroethylene (TFE) was introduced under pressure up to 0.64 MPa, and thereafter 0.041 kg of a 50% methanol solution of di-n-propyl peroxydicarbonate was charged to initiate polymerization. Since the pressure in the system decreased along with the progress of the polymerization, TFE was continuously supplied to make the pressure constant, and 0.052 kg of PPVE was added for every 1 kg of TFE supplied and the polymerization was continued for 18 hours. TFE was released to return the pressure in the autoclave to the atmospheric pressure, and thereafter, an obtained reaction product was washed with water and dried to thereby obtain 30 kg of a powder.

The obtained powder was melt extruded at 360°C with a screw extruder (trade name: PCM46, manufactured by Ikegai Corp) to thereby obtain pellets of a TFE/PPVE copolymer. The PPVE content of the obtained pellets was measured by the method described above. The results are shown in Table 3.

The obtained pellets were put in a vacuum vibration-type reactor VVD-30 (manufactured by Okawara MFG. Co., Ltd.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and vacuumizing was carried out once every 1 hour, and the reaction was carried out at a temperature of 210°C for 10 hours. After the reaction was finished, the reactor was replaced sufficiently by $N_2$ gas to finish the fluorination reaction. By using the fluorinated pellets, the above physical properties were measured by the methods described above. The results are shown in Table 3.

Example 2

Fluorinated pellets were obtained as in Example 1, except for changing the charged amount of PPVE to 1.84 kg, changing the charged amount of methanol to 2.38 kg, adding 0.056 kg of PPVE for every 1 kg of TFE supplied, and changing the polymerization time to 18.5 hours. The results are shown in Table 3.

Example 3

Fluorinated pellets were obtained as in Example 1, except for changing the charged amount of PPVE to 1.95 kg, changing the charged amount of methanol to 2.74 kg, adding 0.058 kg of PPVE for every 1 kg of TFE supplied, and changing the polymerization time to 19 hours. The results are shown in Table 3.

Example 4

Fluorinated pellets were obtained as in Example 1, except for changing the charged amount of PPVE to 2.12 kg, changing the charged amount of methanol to 1.80 kg, adding 0.062 kg of PPVE for every 1 kg of TFE supplied, changing the polymerization time to 19 hours, changing the heating temperature of the vacuum vibration-type reactor to 170°C, and changing the reaction condition to 170°C and 5 hours. The results are shown in Table 3.

Comparative Example 1

Fluorinated pellets were obtained as in Example 1, except for changing the charged amount of pure water to 26.6 L, changing the charged amount of perfluorocyclobutane to 30.4 kg, changing the charged amount of PPVE to 1.32 kg, changing the charged amount of methanol to 2.20 kg, introducing TFE to a pressure of 0.58 MPa, adding 0.046 kg of PPVE for every 1 kg of TFE supplied, and changing the polymerization time to 8.5 hours. The results are shown in Table 3.

Comparative Example 2

51.8 L of pure water was charged in a 174 L-volume autoclave; nitrogen replacement was sufficiently carried out; thereafter, 40.9 kg of perfluorocyclobutane, 2.24 kg of perfluoro(propyl vinyl ether) (PPVE) and 4.04 kg of methanol were charged; the temperature in the system was held at 35°C and the stirring speed was held at 200 rpm. Then, tetrafluoroethylene (TFE) was introduced under pressure up to 0.64 MPa, and thereafter 0.051 kg of a 50% methanol solution of di-n-propyl peroxydicarbonate was charged to initiate polymerization. Since the pressure in the system decreased along with the progress of the polymerization, TFE was continuously supplied to make the pressure constant, and 0.059 kg of PPVE was added for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 43.3 kg of a powder.

By using the obtained powder, the fluorination reaction was carried out as in Example 1 to thereby obtain fluorinated pellets. The results are shown in Table 3.

Comparative Example 3

Fluorinated pellets were obtained as in Example 1, except for changing the charged amount of PPVE to 2.58 kg, changing the charged amount of methanol to 1.75 kg, adding 0.071 kg of PPVE for every 1 kg of TFE supplied, and changing the polymerization time to 18.5 hours. The results are shown in Table 3.

Comparative Example 4

Fluorinated pellets were obtained as in Comparative Example 2, except for changing the charged amount of PPVE to 2.94 kg, changing the charged amount of methanol to 1.97 kg, and adding 0.062 kg of PPVE for every 1 kg of TFE supplied, to thereby obtain 43.4 kg of a powder. The results are shown in Table 3.

Comparative Example 5

Non-fluorinated pellets were obtained as in Example 1, except for changing the charged amount of PPVE to 2.18 kg, changing the charged amount of methanol to 2.93 kg, adding 0.063 kg of PPVE for every 1 kg of TFE supplied, and changing the polymerization time to 19.5 hours. The results are shown in Table 3.

[Table 3]

**Table 3**

|  | PPVE content (% by mass) | MFR (g/10 min) | Number of functional groups (groups/C$10^6$) | Melting point (°C) |
|---|---|---|---|---|
| Example 1 | 4.9 | 17.0 | <6 | 302 |
| Example 2 | 5.3 | 19.0 | <6 | 302 |
| Example 3 | 5.5 | 21.0 | <6 | 302 |
| Example 4 | 5.8 | 17.0 | 27 | 302 |
| Comparative Example 1 | 4.4 | 17.6 | <6 | 304 |
| Comparative Example 2 | 5.6 | 25.1 | <6 | 302 |
| Comparative Example 3 | 6.6 | 17.3 | <6 | 299 |
| Comparative Example 4 | 5.8 | 15.0 | <6 | 302 |
| Comparative Example 5 | 5.9 | 21.0 | 270 | 302 |

The description of "<6" in Table 3 means that the number of functional groups is less than 6.

Then, by using the obtained pellets, the following properties were evaluated. The results are shown in Table 4.

(Haze value)

By using the pellets and a heat press molding machine, a sheet of approximately 1.0 mm in thickness was prepared. The sheet was immersed in a quartz cell filled with pure water, and the haze value was measured according to JIS K 7136 using a haze meter (trade name: NDH 7000SP, manufactured by NIPPON DENSHOKU INDUSTRIES CO., LTD.).

(Ozone exposure test)

The copolymer was compression-molded at 350°C under a pressure of 0.5 MPa to prepare a sheet of 1 mm in thickness, and a sheet having $10 \times 20$ mm was cut out therefrom, which was regarded as a sample for an ozone exposure test. Ozone gas (ozone/oxygen = 10/90% by volume) produced by an ozone generator (trade name: SGX-A11MN (modified), manufactured by Sumitomo Precision Products Co., Ltd.) was connected to a PFA container containing ion-exchanged water, bubbled in ion-exchanged water to add water vapor to ozone gas, and then ion-exchanged water was passed through the sample-containing PFA cell at 0.7 liters/min at room temperature to expose the sample to wet ozone gas. The sample was taken out 120 days after the beginning of exposure, the surface was lightly rinsed with ion-exchanged water, a portion at a depth of 5 to 200 $\mu$m from the sample surface was observed with a transmission optical microscope of 100 magnification, an image was taken with a standard scale, the number of cracks of 10 $\mu$m in length or more per mm$^2$ of the sample surface was measured, and evaluations were made according to the following criteria.

Good: 10 cracks or less
Poor: more than 10 cracks

(Storage elastic modulus (E'))

The storage elastic modulus was determined by carrying out a dynamic viscoelasticity measurement using a DVA-220 (manufactured by IT Keisoku Seigyo K.K.). By using, as a sample test piece, a heat press molded sheet of 25 mm in length, 5 mm in width and 0.2 mm in thickness, the measurement was carried out under the condition having a temperature-increasing rate of 2°C/min, and a frequency of 10 Hz, and in the range of 30°C to 250°C, and the storage elastic modulus (MPa) at 150°C was identified.

(Amount of recovery)

The amount of recovery was measured according to the method described in ASTM D395 or JIS K6262:2013.
Approximately 2 g of the pellets was charged in a metal mold (inner diameter: 13 mm, height: 38 mm), and in that state, melted by hot plate press at 370°C for 30 min, thereafter, water-cooled under a pressure of 0.2 MPa (resin pressure) to thereby prepare a formed article of approximately 8 mm in height. Thereafter, the obtained formed article was cut to prepare a test piece of 13 mm in outer diameter and 6 mm in height. The prepared test piece was compressed to a compression deformation rate of 50% (that is, the test piece of 6 mm in height was compressed to a height of 3 mm) at a normal temperature by using a compression device. Then, the compressed test piece being fixed on the compression device was allowed to stand still in an electric furnace at 150°C for 18 hours. The compression device was taken out from the electric furnace, and cooled to room temperature; thereafter, the test piece was dismounted. The collected test piece was allowed to stand at room temperature for 30 min, the height of the collected test piece was measured and the amount of recovery was determined by the following formula.

$$\texttt{Amount of recovery (mm) = } t_2 - t_1$$

$t_1$: a height of a spacer (mm)
$t_2$: a height of the test piece dismounted from the compression device (mm)

In the above test, $t_1$ was 3 mm.

(Seal pressure at 150°C)

The seal pressure at 150°C was determined from the result of the compression set test at 150°C and the result of the storage elastic modulus measurement at 150°C by the following formula.

$$\texttt{Seal pressure at 150°C (MPa) = } (t_2 - t_1)/t_1 \times E'$$

$t_1$: the height of a spacer (mm)
$t_2$: the height of the test piece dismounted from the compression device (mm)
E': a storage elastic modulus (MPa) at 150°C

(Water vapor permeability)

By using the pellets and a heat press molding machine, a sheet-shape test piece of approximately 0.2 mm in thickness was prepared. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with water, and held at a temperature of 95°C for 30 days, and thereafter, the test cup was taken out and allowed to stand at room temperature for 2 hours; thereafter, the amount of the mass lost was measured. The water vapor permeability (g·cm/m$^2$) was determined by the following formula.

Water vapor permeability (g·cm/m$^2$) = the amount of the mass lost (g) $\times$ the thickness of the sheet-shape test piece (cm) / the permeation area (m$^2$)

(Injection moldability)

· Conditions

The copolymer was injection-molded by using an injection molding machine (SE50EV-A, manufactured by Sumitomo Heavy Industries, Ltd.) set at a cylinder temperature of 390°C, a metal mold temperature of 180°C, and an injection rate of 10 mm/s. A metal mold (100 mm $\times$ 100 mm $\times$ 2.0 mmt) obtained by Cr-plating HPM38 was used. The obtained injection molded article was observed and evaluated according to the following criteria. The presence/absence of surface roughness was checked by touching the surface of the injection molded articles.

3: The entire surface of the injection molded article was smooth.
2: Roughness was confirmed on the surface within the region of 1 cm of the portion where the gate of the metal mold was positioned.
1: Roughness of the entire surface of the injection molded article was confirmed.
0: The cavity of the metal mold was not entirely filled with the copolymer, and the injection molded article did not have a desired shape.

(Electrolytic solution immersion test)

Approximately 5 g of the pellets was charged in a metal mold (inner diameter: 120 mm, height: 38 mm), and melted by hot plate press at 370°C for 20 min, thereafter, water-cooled with a pressure of 1 MPa (resin pressure) to thereby prepare a formed article of approximately 0.2 mm in thickness. Thereafter, by using the obtained formed article, test pieces of 15-mm square were prepared.
10 sheets of the obtained test pieces and 2 g of dimethyl carbonate (DMC) were put in a 20-mL glass-made sample bottle, and the cap of the sample bottle was closed. The sample bottle was put in a thermostatic chamber at 80°C, and allowed to stand for 144 hours to thereby immerse the test pieces in DMC. Thereafter, the sample bottle was taken out from the thermostatic chamber and cooled to room temperature; then, the test pieces were taken out from the sample bottle. DMC remaining after the test pieces were taken out was allowed to be air-dried in the sample bottle put in a room controlled to be a temperature of 25°C for 24 hours; and 2 g of ultrapure water was added. The obtained aqueous solution was transferred to a measuring cell of an ion chromatograph system, and the amount of fluorine ions in the aqueous solution was measured by an ion chromatograph system (manufactured by Thermo Fisher Scientific Inc., Dionex ICS-2100).

(Metal mold corrosion test)

20 g of the pellets was put in a glass container (50-ml screw vial); and a metal post (5-mm square shape, length of 30 mm) formed of HPM38 (Cr-plated) or HPM38 (Ni-plated) was hung in the glass container so as not to be in contact with the pellets. Then, the glass container was covered with a lid made of aluminum foil. The glass container was put in an oven as is, and heated at 380°C for 3 hours. Thereafter, the heated glass container was taken out from the oven, and cooled to room temperature; and the degree of corrosion of the surface of the metal post was visually observed. The degree of corrosion was judged based on the following criteria.

Good: no corrosion observed
Fair: corrosion slightly observed
Poor: corrosion observed

(Electric wire coating test)

Extrusion coating in the following coating thickness was carried out on a silver-plated conductor composed of 19 twisted wires each having 0.08 mm with a copolymer by a 30-mmφ electric wire coating forming machine (manufactured by Tanabe Plastics Machinery Co., Ltd.) to thereby obtain a coated electric wire. The extrusion conditions for electric wire coating were as follows.

    a) Core conductor: conductor diameter: approximately 0.40 mm (19 × 0.08 mm twisted)
    b) Coating thickness: 0.30 mm
    c) Coated electric wire diameter: 1.00 mm
    d) Electric wire take-over speed: 140 m/min
    e) Extrusion condition:

        · Cylinder screw diameter = 30 mm, a single screw extruder of L/D = 24
        · Die (inner diameter)/tip (outer diameter) = 10.0 mm/4.0 mm

Set temperature of extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C

(Variation of outer diameter)

The outer diameter of the obtained coated electric wire was continuously measured for 1 hour using a diameter measuring head (ODAC 18XY manufactured by Zumbach). Among the measured outer diameter values, the outer diameter value that most deviated from the predetermined outer diameter value (1.00 mm) was rounded off to the third decimal place to determine a variation value of the outer diameter. The ratio (the outer diameter variation ratio) of the absolute value of the difference between the predetermined outer diameter (1.00 mm) and the outer diameter variation value to the predetermined outer diameter was calculated, and evaluated according to the following criteria.

(Outer diameter variation ratio (%)) = | (outer diameter variation value) - (predetermined outer diameter) | / (predetermined outer diameter) × 100

    ±0.01: outer diameter variation ratio being 1% or less
    ±0.02: outer diameter variation ratio being greater than 1% and 2% or less
    Poor: outer diameter variation ratio being greater than 2%

(Core wire corrosion test)

Extrusion coating in the following coating thickness was carried out on a conductor 0.812 mm in conductor diameter with a copolymer by a 30-mmφ electric wire coating forming machine (manufactured by Tanabe Plastics Machinery Co., Ltd.) to thereby obtain a coated electric wire. The extrusion conditions for electric wire coating were as follows.

    a) Core conductor: mild steel wire conductor diameter: 0.812 mm (AWG20)
    b) Coating thickness: 0.9 mm
    c) Coated electric wire diameter: 2.6 mm
    d) Electric wire take-over speed: 3 m/min
    e) Extrusion condition

        · Cylinder screw diameter = 30 mm, a single-screw extruder of L/D = 22
        · Die (inner diameter)/tip (outer diameter) = 26.0 mm/8.0 mm

Set temperature of the extruder: barrel section C-1 (330°C), barrel section C-2 (350°C), barrel section C-3 (370°C), head section H (380°C), die section D-1 (380°C), die section D-2 (380°C), Set temperature for preheating core wire: 80°C

The coated electric wire formed under the above forming conditions was cut out into 20 cm in length, and was allowed to stand still in a thermohygrostatic chamber (Junior SD-01, manufactured by Formosa Advanced Technologies Co., Ltd.) at 60°C at a humidity of 95% for 2 weeks, then the coating layer was removed to expose the conductor, and the surface of the conductor was visually observed and evaluated according to the following criteria.

Good: no corrosion observed
Poor: corrosion observed

(Abrasion test)

By using the pellets and a heat press molding machine were used to prepare a sheet-shape test piece approximately 0.2 mm in thickness, and a test piece having 10 cm × 10 cm was cut out therefrom. The prepared test piece was fixed to a test bench of a Taber abrasion tester (No. 101 Taber type abrasion tester with an option, manufactured by YASUDA SEIKI SEISAKUSHO, LTD.), and the abrasion test was carried out using the Taber abrasion tester under conditions involving a temperature of 25°C, a load of 500 g, an abrasion wheel CS-10 (rotationally polished in 20 rotations with an abrasive paper #240), and a rotation rate of 60 rpm. The weight of the test piece after 1,000 rotations was measured, and the same test piece was further subjected to the test of 10,000 rotations, and then the weight of the test piece was measured. The abrasion loss was determined by the following formula.

$$\text{Abrasion loss (mg) = M1 - M2}$$

M1: weight of test piece after 1,000 rotations (mg)
M2: weight of test piece after 10,000 rotations (mg)

(Nitrogen permeability coefficient)

By using the pellets and a heat press molding machine, a sheet-shape test piece of approximately 0.1 mm in thickness was prepared. Using the obtained test piece, nitrogen permeability was measured with a differential pressure type gas permeation meter (L100-5000 gas permeability meter, manufactured by Systech Illinois) according to the method described in JIS K7126-1:2006. The nitrogen permeability value at a permeation area of 50.24 $cm^2$ at a test temperature of 70°C at a test humidity of 0% RH was obtained. The obtained nitrogen permeability and the test piece thickness were used to calculate the nitrogen permeability coefficient from the following equation.

Nitrogen permeability coefficient ($cm^3 \cdot mm/ (m^2 \cdot 24 \ h \cdot atm)$) = GTR × d

GTR: nitrogen permeability ($cm^3/ (m^2 \cdot 24 \ h \cdot atm)$)
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with DMC, and held at a temperature of 60°C for 30 days, thereafter the test cup was taken out and allowed to stand at room temperature for 1 hour, and then the amount of the mass lost was measured. DMC permeability ($g \cdot cm/m^2$) was determined by the following formula.

Electrolytic solution permeability ($g \cdot cm/m^2$) = the amount of mass lost (g) × the thickness of the sheet-shape test piece (cm) / the permeation area ($m^2$)

(Methyl ethyl ketone (MEK) permeability)

By using the pellets and a heat press molding machine, a sheet-shape test piece of approximately 0.1 mm in thickness was prepared. 10 g of MEK was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with MEK, and held at a temperature of 60°C for 60 days, thereafter the test cup was taken out and allowed to stand at room temperature for 1 hours, and then the amount of the mass lost was measured. MEK permeability ($mg \cdot cm/m^2 \cdot day$) was determined by the following formula:

MEK permeability (mg·cm/m$^2$·day) = [the amount of mass lost (mg) × the thickness of the sheet-shape test piece (cm)] / [the permeation area (m$^2$)·number of days (day)]

(Rate of deflection at 95°C under load)

By using the pellets and a heat press molding machine, a sheet-shape test piece of approximately 3 mm in thickness, and a test piece having 80 × 10 mm was cut out therefrom and heated in an electric furnace at 100°C for 20 hours. Except that the obtained test piece was used, a test was carried out according to the method described in JIS K-K 7191-1 with a heat distortion tester (manufactured by YASUDA SEIKI SEISAKUSHO, LTD.) under conditions involving a test temperature of 30 to 150°C, a temperature-increasing rate of 120°C/hour, a bending stress of 1.8 MPa, and a flatwise method. The rate of deflection under load was determined by the following formula. A sheet, the rate of deflection at 95°C under load of which is small, has excellent high-temperature rigidity.

$$\text{Rate of deflection under load (\%)} = a2 / a1 \times 100$$

a1: thickness of specimen before test (mm)
a2: amount of deflection at 95°C (mm)

(Creep resistance evaluation)

Creep resistance was measured according to the method described in ASTM D395 or JIS K6262:2013. By using the pellets and a heat press molding machine, a formed article 13 mm in outer diameter and 8 mm in height was prepared. The obtained formed article was cut to prepare a test piece of 13 mm in outer diameter and 6 mm in height. The prepared test piece was compressed to a compression deformation rate of 25% at normal temperature by using a compression device. The compressed test piece being fixed on the compression device was allowed to stand still in an electric furnace at 80°C for 72 hours. The compression device was taken out from the electric furnace, and cooled to room temperature; thereafter the test piece was dismounted. The collected test piece was allowed to stand at room temperature for 30 min, and the height of the collected test piece was measured and the extent of recovery was determined by the following formula.

$$\text{Extent of recovery (\%)} = (t_2 - t_1)/t_3 \times 100$$

$t_1$: a height of spacer (mm)
$t_2$: a height of the test piece dismounted from compression device (mm)
$t_3$: a height (mm) after being compressibly deformation

In the above test, $t_1$ was 4.5 mm, and $t_3$ was 1.5 mm.

(Tensile creep test)

Tensile creep strain was measured using TMA-7100 manufactured by Hitachi High-Tech Science Corporation. By using the pellets and a heat press molding machine, a sheet of approximately 0.1 mm in thickness, and a sample of 2 mm in width and 22 mm in length was prepared from the sheet. The sample was attached to the measurement jigs, with the distance between the jigs being 10 mm. A load was applied to the sample such that the cross-sectional load was 2.41 N/mm$^2$, the sample was allowed to stand at 240°C, the displacement (mm) of the length of the sample from 90 minutes after the beginning of the test to 300 minutes after the beginning of the test was measured, and the ratio of the displacement (mm) of the length to the initial sample length (10 mm) (tensile creep strain (%)) was calculated. A sheet, the tensile creep strain (%) of which measured under conditions involving a temperature of 240°C and for 300 minutes is small, is hardly elongated even when a tensile load is applied in an extremely high-temperature environment, and has excellent high temperature tensile creep property.

(Dielectric loss tangent)

By melt forming the pellets, a cylindrical test piece of 2 mm in diameter was prepared. The prepared test piece was set in a cavity resonator for 6 GHz manufactured by Kanto Electronic Application and Development Inc., and the dielectric loss tangent was measured with a network analyzer manufactured by Agilent Technologies Inc. By analyzing the measurement result was analyzed by analysis software "CPMA", manufactured by Kanto Electronic Application and Development Inc., on PC connected to the network analyzer, the dielectric loss tangent (tanδ) at 20°C at 6 GHz was determined.

[Table 4]

Table 4

| | Haze value (%) | Ozone exposure test — 120 days | 150°C Storage elastic modulus (MPa) | Amount of recovery (mm) | 150°C Seal pressure (MPa) | Water vapor permeability (g·cm/m²) | Injection moldability | Electrolytic solution immersion test — Amount of fluorine ions dissolving out (ppm by mass) | Metal mold corrosion test — HPM38 (Cr-plated) | Metal mold corrosion test — HPM38 (Ni-plated) | Electric wire coating test — Variation in outer diameter | Electric wire coating test — Core wire corrosion | Abrasion loss (mg) | Nitrogen permeability coefficient (cm³·mm/(m²·24 h·atm)) | Electrolytic solution permeability (g·cm/m²) | MEK permeability (mg·cm/m²·day) | Rate of deflection at 95°C under load (%) | Creep resistance evaluation — Extent of recovery (%) | 240°C Tensile creep strain (%) | Dielectric tangent |
|---|---|---|---|---|---|---|---|---|---|---|---|---|---|---|---|---|---|---|---|---|
| Example 1 | 11.2 | Good | 87 | 0.017 | 0.49 | 11.4 | 1 | 0.6 | Good | Good | ±0.02 | Good | 19.0 | 292 | 6.8 | 64.9 | 54% | 23% | 2.58 | 0.00038 |
| Example 2 | 10.9 | Good | 83 | 0.014 | 0.39 | 11.8 | 2 | 0.6 | Good | Good | ±0.01 | Good | 18.6 | 302 | 6.8 | 65.5 | 58% | 21% | 2.91 | 0.00038 |
| Example 3 | 10.8 | Good | 83 | 0.013 | 0.36 | 11.8 | 3 | 0.6 | Good | Good | ±0.01 | Good | 18.7 | 305 | 6.8 | 65.6 | 59% | 20% | 3.09 | 0.00038 |
| Example 4 | 9.9 | Good | 78 | 0.014 | 0.36 | 12.9 | 1 | 0.6 | Good | Good | ±0.02 | Good | 16.5 | 316 | 7.1 | 68.8 | 62% | 19% | 3.38 | 0.00046 |
| Comparative Example 1 | 12.0 | Poor | 101 | 0.022 | 0.74 | 10.1 | 1 | 0.6 | Good | Good | ±0.02 | Good | 20.5 | 274 | 6.6 | 63.0 | 49% | 26% | 2.22 | 0.00037 |
| Comparative Example 2 | 11.0 | Poor | 84 | 0.010 | 0.28 | 11.6 | 3 | 0.6 | Good | Good | ±0.01 | Good | 20.0 | 301 | 6.6 | 64.8 | 59% | 17% | 3.19 | 0.00038 |
| Comparative Example 3 | 8.6 | Good | 70 | 0.010 | 0.23 | 14.6 | 1 | 0.6 | Good | Good | ±0.02 | Good | 14.2 | 350 | 7.2 | 70.5 | 71% | 15% | 4.34 | 0.00041 |
| Comparative Example 4 | 9.7 | Good | 76 | 0.015 | 0.38 | 13.3 | 0 | 0.6 | Good | Good | Poor | Good | 15.8 | 338 | 7.2 | 68.7 | 65% | 19% | 3.38 | 0.00039 |
| Comparative Example 5 | 10.2 | Poor | 80 | 0.012 | 0.32 | 12.6 | 3 | 1.6 | Poor | Poor | ±0.02 | Poor | 17.6 | 352 | 7.9 | 73.5 | 63% | 14% | 4.19 | 0.00102 |

**Claims**

1. A copolymer, which is a fluorine-containing copolymer comprising tetrafluoroethylene (TFE) units and, based on the total of monomer units, 4.8-6.2 mass% of perfluoro(propyl vinyl ether) (PPVE) units, and which has a melt flow rate at 372°C of 17.0-23.0 g/10 min, and has a total number of -CF=CF$_2$, -CF$_2$H, -COF, -COOH, -COOCH$_3$, CONH$_2$ and -CH$_2$OH groups of $\leq$ 50 per 10$^6$ main-chain carbon atoms.

2. The copolymer of claim 1, which has a melt flow rate at 372°C of 17.0-21.0 g/10 min.

3. An injection molded article, comprising the copolymer of claim 1 or 2.

4. A coated electric wire, comprising a coating layer comprising the copolymer of claim 1 or 2.

5. A formed article, which comprises the copolymer of claim 1 or 2 and is a valve, a joint, a flow meter, or an electric wire coating.

**Patentansprüche**

1. Copolymer, das ein fluorhaltiges Copolymer ist und Tetrafluorethylen (TFE)-Einheiten sowie, basierend auf der Gesamtmenge der Monomereinheiten, 4,8-6,2 Gew.-% Perfluor(propylvinylether)(PPVE)-Einheiten umfasst und eine Schmelzflussrate bei 372 °C von 17,0-23,0 g/10 min aufweist und eine Gesamtzahl von -CF=CF$_2$, -CF$_2$H, -COF, -COOH, -COOCH$_3$, CONH$_2$ und -CH$_2$OH-Gruppen von $\leq$ 50 pro 10$^6$ Kohlenstoffatomen der Hauptkette aufweist.

2. Copolymer nach Anspruch 1, das bei 372 °C eine Schmelzflussrate von 17,0-21,0 g/10 min aufweist.

3. Spritzgegossener Artikel, der das Copolymer nach Anspruch 1 oder 2 umfasst.

4. Beschichteter elektrischer Draht, umfassend eine Beschichtungsschicht, die das Copolymer nach Anspruch 1 oder 2 umfasst.

5. Geformter Artikel, der das Copolymer nach Anspruch 1 oder 2 umfasst und ein Ventil, eine Verbindung, ein Durchflussmesser oder eine elektrische Drahtbeschichtung ist.

**Revendications**

1. Copolymère, qui est un copolymère contenant du fluor comprenant des motifs tétrafluoroéthylène (TFE) et, sur la base du total des motifs monomères, 4,8 à 6,2 % en masse de motifs perfluoro(propylvinyléther) (PPVE), et qui présente un indice de fluidité à 372 °C de 17,0 à 23,0 g/10 min, et présente un nombre total de groupes -CF=CF$_2$, -CF$_2$H, -COF, -COOH, -COOCH$_3$, CONH$_2$ et -CH$_2$OH $\leq$ 50 pour 10$^6$ atomes de carbone à chaîne principale.

2. Copolymère selon la revendication 1, qui présente un indice de fluidité à 372 °C de 17,0 à 21,0 g/10 min.

3. Article moulé par injection, comprenant le copolymère selon la revendication 1 ou la revendication 2.

4. Fil électrique enrobé, comprenant une couche d'enrobage comprenant le copolymère selon la revendication 1 ou la revendication 2.

5. Article formé, qui comprend le copolymère selon la revendication 1 ou la revendication 2 et est une valve, un joint, un débitmètre ou un enrobage de fil électrique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009059690 A
- JP 2019214641 A
- US 2009038821 A1
- EP 1462458 B1